# EUROPÄISCHE PATENTSCHRIFT

(11) **EP 3 414 149 B1**
(45) Veröffentlichungstag und Bekanntmachung des Hinweises auf die Patenterteilung: **16.06.2021**
(21) Anmeldenummer: 18719786.8
(22) Anmeldetag: 13.04.2018
(51) Int. Cl.: B60J 7/16

(54) **KAROSSERIE FÜR EIN ZWEIRAD**
BODY FOR TWO-WHEELER
CARROSSERIE POUR CYCLE À DEUX-ROUES

(30) Priorität: 15.04.2017 DE 102017003689
(43) Veröffentlichungstag der Anmeldung: 19.12.2018
(73) Patentinhaber: Audi AG, 85045 Ingolstadt (DE)
(72) Erfinder: ROSSETTI, Mario, 74861 Neudenau (DE)
(86) Internationale Anmeldenummer: PCT/EP2018/059495
(87) Internationale Veröffentlichungsnummer: WO 2018/189357

(56) Entgegenhaltungen:
- EP-A2- 0 891 920
- EP-A2- 1 897 736
- DE-U1- 8 313 054

## Beschreibung

Die Erfindung betrifft eine Karosserie für ein Zweirad, insbesondere einen Roller, mit einem Dachelement und mit einem Ablagefach.

Aus der EP 1 084 944 A2 ist ein Roller mit einem faltbaren Dach bekannt, das zwischen einer den Fahrer abdeckenden Position und einer in einem entsprechenden Gehäuse abgelegten Position verstellt werden kann. Ein solches faltbares Dach ist jedoch verhältnismäßig teuer und nimmt in seinem abgelegten Zustand das komplette Volumen einer ansonsten in dem Gehäuse zur Verfügung stehenden Ablagemöglichkeit ein. Außerdem ist der Deckel des Ablagefachs im Gegensatz zur vorliegenden Erfindung an einem feststehenden Karosserieteil befestigt und kein Teil des Dachelements.

In der US 2014/0312644 A1 ist ein Zweirad mit einer verstellbaren und mehrere, auseinanderfahrbare Segmente aufweisenden Windschutzscheibe bekannt. Neben der recht instabilen Konstruktion weist diese Lösung den Nachteil auf, dass keinerlei Ablageraum zur Verfügung steht.

Gerade in Ballungszentren, in denen es täglich zu sehr vielen und sehr langen Staus und sonstigen Verkehrsbehinderungen kommt, steigen Paketboten und ähnliche Dienstleister immer häufiger auf Zweiräder um, da auf diese Weise ein besseres Vorankommen auf den überfüllten Straßen möglich ist. Ein sehr gutes Beispiel hierfür sind auch die bereits seit längerem bestehenden Fahrradkuriere, die häufig für besonders eilige, allerdings volumenmäßig sehr kleine Sendungen eingesetzt werden.

Nachteilig bei sämtlichen zu diesem Zweck zur Verfügung stehenden Zweirädern ist jedoch zum einen der geringe Wind- und Wetterschutz und zum anderen insbesondere die geringe Transportkapazität der Zweiräder. Dies macht entweder ein häufiges Zurückkehren des Paketboten zu einer Versendestation notwendig oder ermöglicht nur den Transport von vergleichsweise kleinen Sendungen.

Auch Privatpersonen nutzen aufgrund der unbefriedigenden Verkehrssituation in den Innenstädten immer häufiger Zweiräder. Auch für diesen Personenkreis steht jedoch noch kein befriedigendes Konzept zur Verfügung.

Es ist daher Aufgabe der vorliegenden Erfindung, eine Karosserie für ein Zweirad zu schaffen, die einen guten Wind- und Wetterschutz bietet, eine für Zweiräder große Transportkapazität besitzt und dennoch den bekannten Lösungen im Hinblick auf deren Wendigkeit im Straßenverkehr nicht nachsteht.

Erfindungsgemäß wird diese Aufgabe durch die in Anspruch 1 genannten Merkmale gelöst.

Die erfindungsgemäße Karosserie weist demnach ein zwischen wenigstens zwei Positionen drehbar gelagertes Dachelement auf, wodurch es möglich ist, das Zweirad in einer unteren bzw. geöffneten Position des Dachelements zu nutzen, beispielsweise wenn ein geringeres Ladevolumen benötigt wird und/oder wenn kein Schutz gegen schlechtes Wetter erforderlich ist. In der oberen, geschlossenen Position des Dachelements kann der Nutzer des Zweirads dasselbe auch bei schlechteren Wetterverhältnissen nutzen, da das Dachelement in dieser Stellung einen entsprechenden Schutz bietet. Des Weiteren ergibt sich in dieser Position des Dachelements ein vergrößertes Ablagefach, so dass das Zweirad eine größere Ladekapazität besitzt und demnach größere Pakete oder ähnliches transportiert werden können. Durch das mit dem zu dem Dachelement gehörenden Deckel verschlossene Ablagefach ist dagegen ein besonders guter Schutz für die darin angeordneten Waren gewährleistet.

Durch die erfindungsgemäße drehbare Lagerung des Dachelements ergibt sich nicht nur eine einfache Konstruktion, sondern auch eine einfache Verstellung desselben. Dabei befinden sich in der unteren Position des Dachelements die Dachstreben in einer abgelegten Stellung und stellen somit keine Störung für den regulären Betrieb des Zweirads dar.

Um einen sicheren Betrieb des Zweirads zu gewährleisten, kann in einer sehr vorteilhaften Weiterbildung der Erfindung vorgesehen sein, dass das Dachelement in seinen beiden Positionen verriegelbar ist.

Des Weiteren kann in einer Ausgestaltung der Erfindung vorgesehen sein, dass die Dachstreben in der oberen Position des Dachelements mit einem Windschutzscheibenrahmen verbunden sind. Durch diese Verbindung des Dachelements mit dem Windschutzscheibenrahmen ergibt sich nicht nur ein durchgehendes und somit einen besonders guten Wind- und Wetterschutz bietendes Dach, sondern dies führt auch zu einer Erhöhung der Steifigkeit der erfindungsgemäßen Karosserie.

Diese hohe Steifigkeit der Karosserie kann noch dadurch verbessert werden, dass in einer weiteren vorteilhaften Ausgestaltung der Erfindung die Dachstreben mit dem Windschutzscheibenrahmen verriegelbar sind.

Des Weiteren kann vorgesehen sein, dass die Drehachse in einem hinteren Bereich der Karosserie angeordnet ist. Dies führt dazu, dass der Nutzer einen sehr einfachen Zugang zu dem Ablagefach in seinem geöffneten, sich in der oberen Position des Dachelements ergebenden Zustand hat. Des Weiteren werden auf diese Weise sich bewegende Teile im hintersten Bereich der Karosserie vermieden.

Um den Wetterschutz zu verbessern und flexibel gestalten zu können, kann des Weiteren vorgesehen sein, dass zwischen den Dachstreben ein zwischen einer geöffneten und geschlossenen Stellung verstellbares Abdeckelement angeordnet ist.

Ein guter Schutz für das Abdeckelement in seiner geöffneten Stellung ergibt sich, wenn dasselbe in einer Aufnahme in dem Ablagefach aufnehmbar ist.

Des Weiteren kann vorgesehen sein, dass die Dachstreben in das Dachelement einfahrbar sind. Auf diese Weise ist es möglich, die Dachstreben vollständig in dem Dachelement aufzunehmen, wodurch sich in dem Bereich seitlich des Fahrersitzes ein größerer Freiraum ergibt.

Wenn in einer weiteren, sehr vorteilhaften Ausgestaltung der Erfindung ein in einer Radnabe angeordneter Elektromotor als Antriebsquelle für das Zweirad vorgesehen ist, ist ein besonders umweltfreundlicher Betrieb des die erfindungsgemäße Karosserie aufweisenden Zweirads möglich. Vorteilhaft ist dies insbesondere im Hinblick auf die Verwendung des Zweirads in Ballungszentren, da es für mit bestimmten Antrieben ausgestattete Fahrzeuge bereits zum jetzigen Zeitpunkt Fahrverbote gibt, deren Anzahl sich in Zukunft mit großer Wahrscheinlichkeit erhöhen wird.

Des Weiteren kann vorgesehen sein, dass in einer Bodengruppe der Karosserie wenigstens eine den Elektromotor mit elektrischem Strom versorgende Batterie angeordnet ist. Eine solche Anordnung der Batterie bzw. der Batterien, die zur Stromversorgung des Elektromotors dienen, ist einerseits sehr platzsparend und sorgt andererseits für einen niedrigen Schwerpunkt der erfindungsgemäßen Karosserie, was das Fahrverhalten des die Karosserie aufweisenden Zweirads wesentlich verbessert.

Nachfolgend sind Ausführungsbeispiele der Erfindung anhand der Zeichnung prinzipmäßig dargestellt.

Es zeigt:
- Fig. 1: eine perspektivische Ansicht eines erfindungsgemäßen Zweirads mit einem Dachelement in einer ersten Position;
- Fig. 2: eine Seitenansicht des Zweirads aus Fig. 1 mit dem Dachelement in einer Zwischenstellung;
- Fig. 3: das Zweirad aus Fig. 2 mit dem Dachelement in einer zweiten Position;
- Fig. 4: eine Draufsicht auf das Zweirad gemäß der Figuren 1 bis 3 mit einem Abdeckelement in einer ersten Stellung;
- Fig. 5: eine Draufsicht gemäß Fig. 4 mit einem Abdeckelement in einer zweiten Stellung;
- Fig. 6: eine Seitenansicht eines Fahrersitzes des Zweirads;
- Fig. 7: eine Ansicht gemäß dem Pfeil VII aus Fig. 6;
- Fig. 8: eine perspektivische Ansicht eines Cockpits des Zweirads in einer ersten Position;
- Fig. 9: eine Ansicht des Cockpits gemäß Fig. 8 in einer zweiten Position; und
- Fig. 10: einen Ständer für das Zweirad.

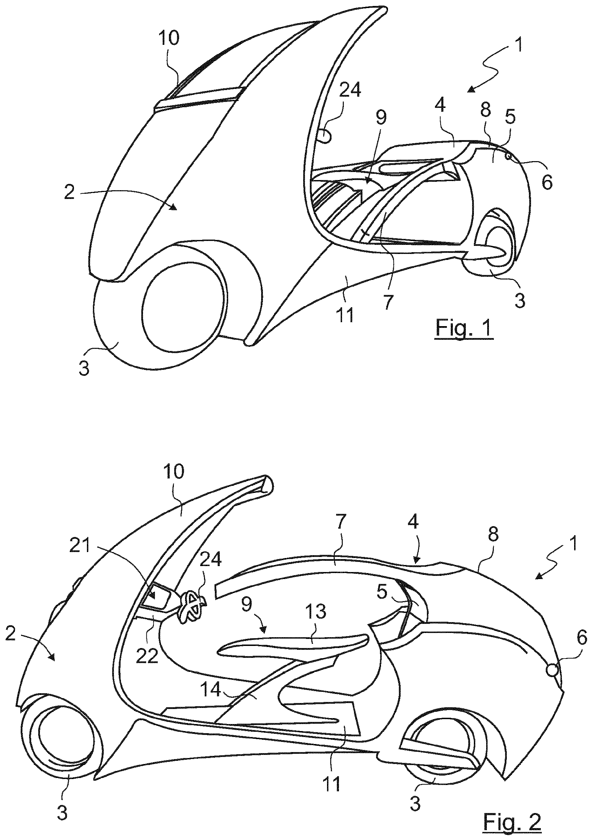

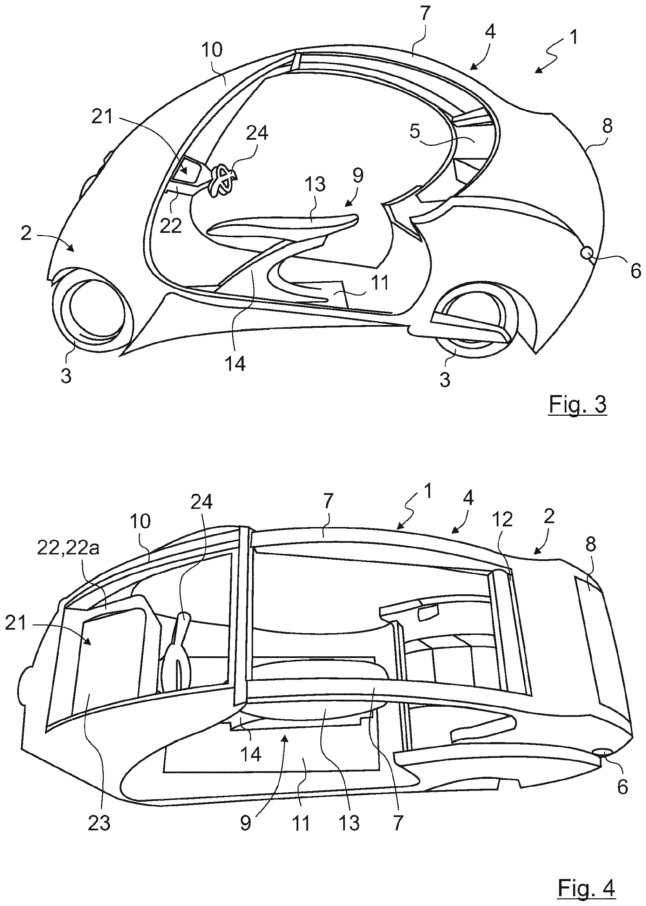

Fig. 1 zeigt ein Zweirad 1, im vorliegenden Fall einen Roller, mit einer Karosserie 2. An der Karosserie 2 sind unter anderem zwei Räder 3 angebracht, wie in den Seitenansichten der Figuren 2 und 3 besser erkennbar ist.

Die Karosserie 2 weist ein Dachelement 4 und ein Ablagefach 5 auf. Wie nachfolgend ausführlich beschrieben, ist das Dachelement 4 um eine Drehachse 6 zwischen wenigstens zwei Positionen drehbar gelagert. Hierbei zeigt Fig. 1 eine erste, untere Position des Dachelements 4, Fig. 2 zeigt eine Zwischenstellung des Dachelements 4und Fig. 3 zeigt eine zweite, obere Position desselben. Die Drehachse 6 ist im vorliegenden Fall in einem hinteren Bereich der Karosserie 2 vorgesehen, was zu einer optimalen Nutzbarkeit des Ablagefachs 5 führt. Die Drehachse 6 des Dachelements 4 gegenüber der Karosserie 2 kann auf an sich bekannte Art und Weise realisiert werden.

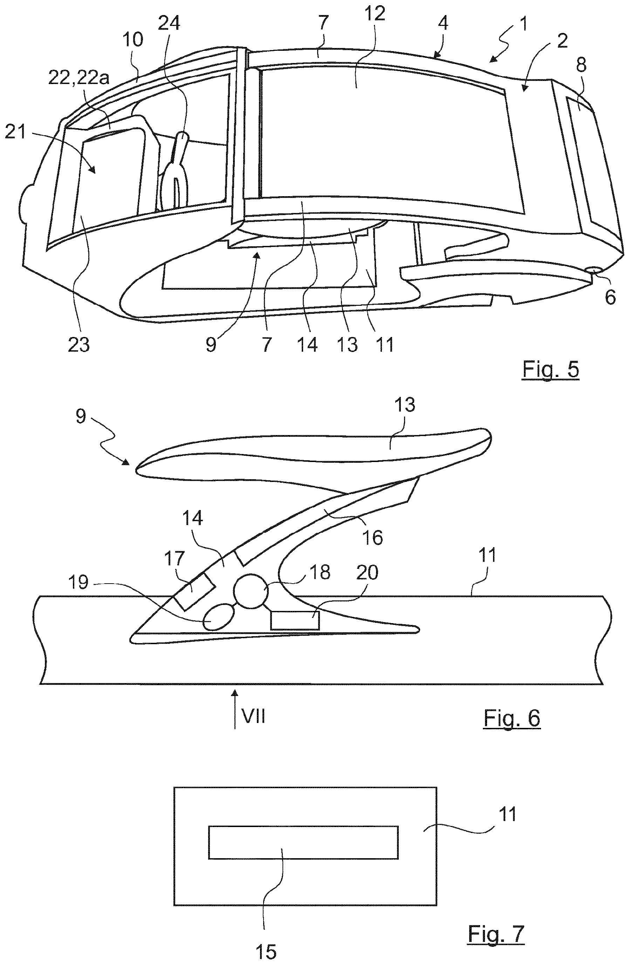

Wie ebenfalls in den Figuren 1 bis 3 sowie in den Draufsichten der Figuren 4 und 5 erkennbar ist, weist das Dachelement 4 zwei parallel zueinander verlaufende Dachholme bzw. Dachstreben 7 auf. Die Dachstreben 7 sind mit einem Deckel 8 für das Ablagefach 5 verbunden bzw. einteilig mit demselben ausgeführt, der ebenfalls Teil des Dachelements 4 ist und mit demselben bewegt wird.

In Fig. 1 ist zu erkennen, dass in der ersten, unteren Position des Dachelements 4 die Dachstreben 7 seitlich eines Fahrersitzes 9 der Karosserie 2 des Zweirads 1 angeordnet sind. In dieser ersten, unteren Position des Dachelements 4 weist das Ablagefach 5 ein verkleinertes Volumen auf und ist mittels des Deckels 8 geschlossen. Dagegen sind in der zweiten, oberen Position des Dachelements 4 die Dachstreben 7 oberhalb des Fahrersitzes 9 angeordnet und das Ablagefach 5 weist ein vergrößertes Volumen auf. Das Volumen des Ablagefachs 5 kann in dieser Position des Dachelements 4 beispielsweise 120 - 150 Liter betragen. In dieser in Fig. 3 dargestellten Position des Dachelements 4 kann ein nicht dargestellter, sich auf dem Fahrersitz 9 befindender Fahrer direkt in das Ablagefach 5 greifen, da dasselbe in dieser Stellung des Dachelements 4 geöffnet ist. Grundsätzlich wäre es denkbar, diese Öffnung des Ablagefachs 5 in Richtung des Fahrers mittels eines Rollos oder einer ähnlichen Trenneinrichtung zu verschließen.

Durch die beschriebene Ausführung des Dachelements 4 kann das Zweirad 1 in der unteren Position des Dachelements 4 wie ein üblicher Roller betrieben werden, der jedoch gegenüber bekannten Rollern durch das Ablagefach 5 ein vergrößertes Transportvolumen aufweist. In der oberen Position des Dachelements 4 ergibt sich für den Fahrer ein Wind- und Wetterschutz sowie ein vergrößertes Transportvolumen durch das noch weiter vergrößerte Volumen des Ablagefachs 5.

Durch die geschwungene Form des Dachelements 4 mit den Dachstreben 7 und dem Deckel 8 ergibt sich dabei insgesamt in beiden Positionen des Dachelements 4 ein sehr harmonisches Gesamtbild der Karosserie 2 und damit des gesamten Zweirads 1.

Das Dachelement 4 kann in seinen beiden Positionen, also in der ersten, unteren Position sowie in der zweiten, oberen Position, verriegelbar sein. Beispielsweise sind im vorliegenden Fall in der oberen Position des Dachelements 4 die Dachstreben 7 mit einem Windschutzscheibenrahmen 10 der Karosserie 2 verbunden und es kann vorgesehen sein, die Dachstreben 7 mit dem Windschutzscheibenrahmen 10 verriegelbar auszuführen. Selbstverständlich kann die Verriegelung der Dachstreben 7 auch in einem anderen Bereich erfolgen. In der unteren Position des Dachelements 4 ist die Verriegelung der Dachstreben 7 mit einer Bodengruppe 11 der Karosserie 2 des Zweirads 1 vorstellbar. Beispielsweise ist es jedoch auch möglich, das Dachelement 4 im Bereich der Drehachse 6 zu verriegeln, was eine Verriegelung des Dachelements 4 in beiden Positionen sowie gegebenenfalls in Zwischenstellungen ermöglichen würde. Auch Kombinationen hiervon sind denkbar.

Der Windschutzscheibenrahmen 10 ist dabei nach relativ weit oben geführt und bietet somit einen guten Wind- und Wetterschutz. Durch die Verbindung des Windschutzscheibenrahmens 10 mit dem Dachelement 4 ergibt sich eine zumindest an der Oberseite vollkommen geschlossene Karosserie 2. In nicht dargestellter Weise können auch in den beiden seitlichen Bereichen der Karosserie 2 entsprechende Abdeckungen, beispielsweise in Form geeigneter Planen bzw. Folien, vorgesehen sein, um einen noch besseren Wetterschutz zu erreichen.

In nicht dargestellter Weise können die Dachstreben 7 so ausgeführt sein, dass sie in das Dachelement 4 eingefahren werden können. Dadurch würden sich die Dachstreben 7 nicht mehr seitlich des Fahrersitzes 9, sondern hinter demselben befinden. Dadurch ergibt sich insbesondere für einen sich auf dem Fahrersitz 9 befindenden Beifahrer verbesserte Platzverhältnisse. In ihrem in das Dachelement 4 eingefahrenen Zustand können die Dachstreben 7 gegebenenfalls auch verriegelt werden.

In den Figuren 4 und 5 ist erkennbar, dass zwischen den Dachstreben 7 ein Abdeckelement 12 vorgesehen ist, das zwischen einer geöffneten Stellung, die in Fig. 4 annähernd erreicht ist, und einer in Fig. 5 dargestellten geschlossenen Stellung verstellt werden kann. Selbstverständlich sind auch Zwischenstellungen des Abdeckelements 12 denkbar. In der Position des Dachelements 4 gemäß Fig. 1 sollte sich das Abdeckelement 12 in seiner geöffneten Position befinden, sodass das Dachelement 4 in seine untere Position gebracht werden kann, ohne dass das Abdeckelement 12 mit dem Fahrer bzw. dem Fahrersitz 9 kollidiert.

Das Abdeckelement 12 kann in einer nicht dargestellten Aufnahme in dem Ablagefach 5 aufnehmbar sein. Dort kann das Abdeckelement 12 beispielsweise aufgerollt bzw. aufgewickelt werden, wenn es aus einem entsprechenden flexiblen Material besteht. Statt als aufwickelbares Abdeckelement 12 kann dasselbe auch aus mehreren Teilen ausgeführt und gegebenenfalls faltbar sein. Grundsätzlich kann das Abdeckelement 12 beispielsweise aus einem geeigneten Kunststoffmaterial bestehen, und zwar je nach Ausführung aus einer Kunststofffolie oder aus einem härteren Kunststoffmaterial.

Gegebenenfalls kann sowohl die Bewegung des Dachelements 4 als auch die Bewegung des Abdeckelements 12 durch einen pneumatischen, hydraulischen oder elektrischen Antrieb erfolgen und gegebenenfalls gesteuert sein. Im Falle einer solchen Steuerung ist es selbstverständlich denkbar, das Abdeckelement 12 in seine geöffnete Stellung zu bringen bevor das Dachelement 4 in seine untere Position gebracht wird. Jedoch ist auch eine rein manuelle Betätigung des Dachelements 4 und/oder des Abdeckelements 12 vorstellbar.

Für den Antrieb des Zweirads 1 kann ein nicht dargestellter Elektromotor als Antriebsquelle vorgesehen sein. Dieser kann beispielsweise in einer Radnabe eines der Räder 3 angeordnet sein. Des Weiteren können in der Bodengruppe 11 der Karosserie 2 diesen Elektromotor mit elektrischem Strom versorgende Batterien bzw. wenigstens eine Batterie angeordnet sein. Dies ist in den Figuren jedoch ebenfalls nicht dargestellt. Gegebenenfalls kann der Antrieb des Zweirads 1 auch durch einen konventionellen Verbrennungsmotor erfolgen. Selbstverständlich sind auch Hybrid-, Plug-in-Hybrid- und andere geeignete Antriebsquellen möglich.

Die Figuren 6 und 7 zeigen den Fahrersitz 9 des Zweirads 1 in einer detaillierteren Darstellung. Der Fahrersitz 9 weist eine im vorliegenden Fall als Doppelsitzbank ausgebildete Sitzfläche 13 und eine Konsole 14 zur Verbindung der Sitzfläche 13 mit der Karosserie 2, im vorliegenden Fall mit der Bodengruppe 11, auf. Hierbei ist die Konsole 14 gegenüber der Karosserie 2 in der mit "x" bezeichneten Längsrichtung des Zweirads 1 verschieblich angeordnet. Die Sitzfläche 13 ist gegenüber der Konsole 14 zumindest in der mit "z" bezeichneten Höhenrichtung des Zweirads 1 verschieblich angeordnet.

Wie in der Ansicht von Fig. 7 erkennbar ist, ist die Konsole 14 in einer Führung 15 der Karosserie 2, im vorliegenden Fall der Bodengruppe 11, geführt. Dabei kann die Konsole 14 stufenlos in der Führung 15 verschieblich und gegenüber der Karosserie 2 verriegelbar sein. Zur Verriegelung der Konsole 14 gegenüber der Führung 15 der Karosserie 2 kann beispielsweise ein nicht dargestellter Schnellspanner vorgesehen sein.

Aus Fig. 6 geht hervor, dass die Sitzfläche 13 in einer Führung 16 in der Konsole 14 geführt ist. Die Führung 16 verläuft dabei kurvenförmig, sodass eine Verstellung der Sitzfläche 13 gegenüber der Konsole 14 in der Höhenrichtung z mit einer Verstellung der Sitzfläche 13 auch in der Horizontalrichtung x einhergeht. Vorzugsweise ist auch die Sitzfläche 13 in der Konsole 14 stufenlos verschiebbar.

Die Führungen 15 und 16 sind in dem dargestellten Ausführungsbeispiel jeweils als Nut ausgeführt, in die ein entsprechendes Teil der Konsole 14 bzw. der Sitzfläche 13 eingreift.

Die Konsole 14 weist außerdem ein Ablagefach 17 auf, in dem der Nutzer des Zweirads 1 verschiedene Gegenstände unterbringen kann und das gegebenenfalls mit einem nicht dargestellten Deckel verschließbar sein kann. Des Weiteren sind im vorliegenden Fall innerhalb der Konsole 14 Teile einer Antriebseinrichtung des Zweirads 1 angeordnet. Konkret kann es sich dabei um einen sehr schematisch angedeuteten Elektromotor 18, ein Getriebe 19 und/oder eine Batterie 20 handeln. Der Elektromotor 18, das Getriebe 19 und/oder die Batterie 20 können zusätzlich oder statt des oben beschriebenen, in dem Rad 3 angeordneten Elektromotors und der oben beschriebenen, in der Bodengruppe 11 angeordneten Batterie vorgesehen sein. Bei dem Getriebe 19 kann es sich beispielsweise um ein Automatikgetriebe handeln und dasselbe kann zum Beispiel als Riemengetriebe ausgeführt sein.

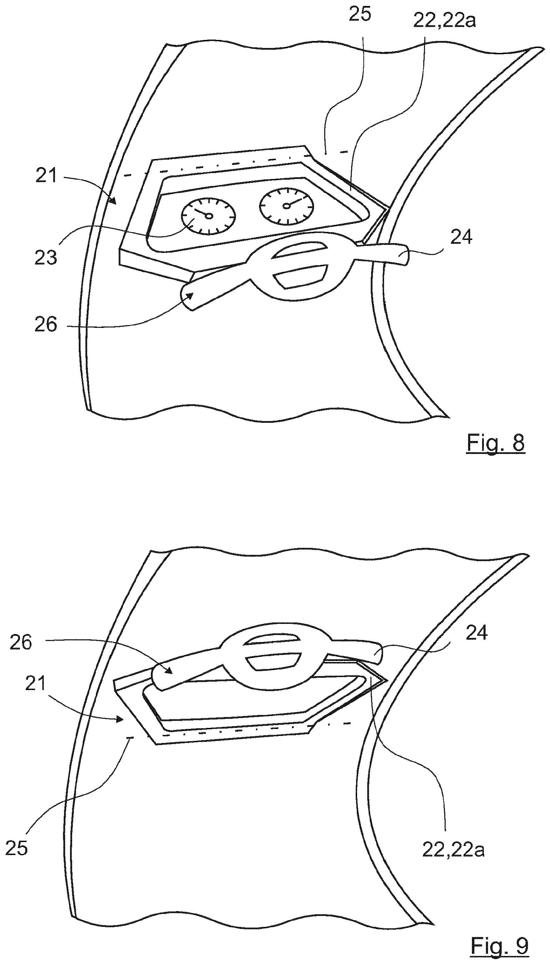

Die Figuren 8 und 9 zeigen ein Cockpit 21 des Zweirads 1. Das Cockpit 21 weist einen Grundkörper 22 auf, an dem eine Anzeige 23 und ein Lenker bzw. eine Lenkhandhabe 24 angebracht sind.

Um eine Anpassung des Cockpits an unterschiedliche Nutzer bzw. Fahrer des Zweirads 1 zu ermöglichen, ist der Grundkörper 22 drehbar an der Karosserie 2 des Zweirads 1 gelagert. Im vorliegenden Fall ist der Grundkörper 22 an einer wenigstens annähernd horizontal verlaufenden Drehachse 25 mit der Karosserie 2 verbunden. Die Drehachse 25 befindet sich dabei im Bereich des Windschutzscheibenrahmens 10.

Dabei kann vorgesehen sein, dass der Grundkörper 22 in wenigstens zwei, gegebenenfalls auch mehreren Positionen gegenüber der Karosserie 2 verriegelbar ist. Diese Verriegelbarkeit des Grundkörpers 22 gegenüber der Karosserie 2 kann mit einem nicht dargestellten Schnellspanner oder einer ähnlichen Einrichtung gewährleistet werden. Zusätzlich oder alternativ ist es auch möglich, den Grundkörper 22 in definierten Raststellungen gegenüber der Karosserie 2 anzuordnen.

Der Grundkörper 22 ist im vorliegenden Fall als Rahmen 22a ausgebildet, der die Anzeige 23 zumindest teilweise umgibt. Im dargestellten Ausführungsbeispiel ist der Rahmen 22a trapezförmig ausgeführt und umgibt die Anzeige 23 an allen vier Seiten.

Die Lenkhandhabe 24 bzw. der Lenker weist mehrere Bedienelemente 26 auf. Im vorliegenden Fall umfassen die Bedienelemente 26 einen Gasgriff, einen Bremshebel und eine Blinkerbetätigung. Selbstverständlich können noch weitere Bedienelemente 26, wie zum Beispiel ein Kupplungshebel, vorgesehen sein oder es können auch verschiedene Bedienelemente 26 weggelassen werden.

Die Verbindung von der Lenkhandhabe 24 zu dem gelenkten Rad 3 kann bei dieser Verstellung des Cockpits 21 ebenfalls verstellt werden. Des Weiteren kann diese Verbindung auch als sogenannte und an sich bekannte Drive-by-Wire-Lenkung ausgeführt sein, sodass zwischen der Lenkhandhabe 24 und dem vorderen Rad 3 keine mechanische Verbindung besteht.

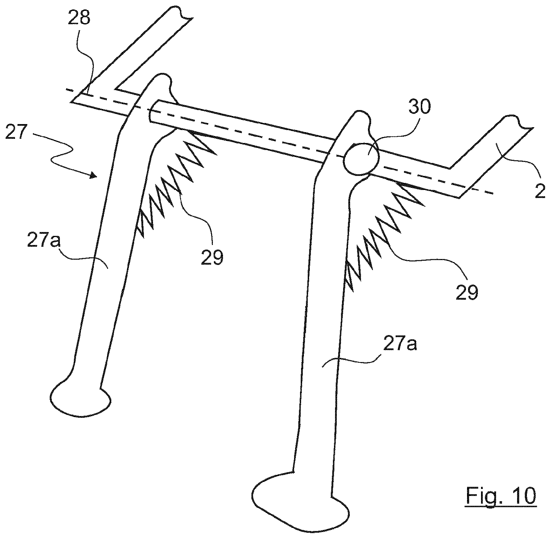

In Fig. 10 ist ein Ständer 27 dargestellt, mit dem das Zweirad 1 auf dem Boden abgestellt werden kann. Der Ständer 27 weist einen Ständerabschnitt 27a auf, der zwischen einer oberen Position und einer unteren Position an einer Drehachse 28 drehbar an der Karosserie 2 gelagert ist. In der unteren Position des Ständerabschnitts 27a bietet der Ständer 27 eine Abstützung der Karosserie 2 und somit des Zweirads 1 am Boden.

Des Weiteren weist der Ständer 27 ein Federelement 29 auf, das so ausgebildet ist, dass es den Ständerabschnitt 27a durch die Federkraft nach unten drückt. Zum Zurückstellen des Ständerabschnitts 27a in die obere Position dient im vorliegenden Fall eine als Elektromotor 30 ausgebildete Antriebseinrichtung, die in der Lage ist, eine Drehbewegung des Ständerabschnitts 27a um seine Drehachse 28 an der Karosserie 2 zu bewirken. Der Elektromotor 30 kann beispielsweise direkt an der Drehachse 28, an der der Ständer 27 an der Karosserie 2 drehbar gelagert ist, angeordnet sein.

Der Ständerabschnitt 27a kann dabei in eine derartige Position nach unten gefahren werden, dass die Räder 3 dennoch auf dem Boden aufliegen. Dadurch müsste das Federelement 29 nur so stark ausgelegt werden, dass es nicht notwendig wäre, mit demselben das gesamte Gewicht des Zweirads 1 anzuheben. Durch den Ständer 27 wird also in jedem Fall ein Umfallen des Zweirads 1 verhindert. An seinem unteren Ende kann der Ständerabschnitt 27a mit nicht dargestellten Rädern versehen sein, die ein Rangieren des Zweirads 1 auch bei heruntergeklapptem Ständer 27 ermöglichen.

Des Weiteren kann eine nicht dargestellte Verriegelungseinrichtung vorgesehen sein, mit welcher der Ständerabschnitt 27a in der oberen Position verriegelt werden kann, sodass es nicht notwendig ist, den Elektromotor 30 ständig zu betreiben, um den Ständerabschnitt 27a in der oberen Position zu halten. Im vorliegenden Fall ist der Ständerabschnitt 27a im Wesentlichen U-förmig ausgebildet. Es wäre jedoch auch möglich, zwei voneinander unabhängige Ständerabschnitte 27a vorzusehen oder lediglich einen Ständerabschnitt 27a, der dann statt in der Form eines Hauptständers in der Form eines Seitenständers ausgeführt wäre.

Sämtliche der oben beschriebenen Verriegelungen bzw. Verriegelungseinrichtungen der einzelnen Bauteile bzw. Elemente des Zweirads 1 können auf die unterschiedlichsten Arten realisiert werden, beispielsweise manuell, pneumatisch, hydraulisch oder elektrisch.

## Patentansprüche

1. Karosserie (2) für ein Zweirad (1), insbesondere einen Roller, mit einem Dachelement (4) und mit einem Ablagefach (5),
**dadurch gekennzeichnet, dass**
das Dachelement (4) wenigstens zwei Dachstreben (7) und einen Deckel (8) für das Ablagefach (5) aufweist, und dass das Dachelement (4) um eine Drehachse (6) zwischen wenigstens zwei Positionen drehbar gelagert ist, wobei in einer ersten, unteren Position des Dachelements (4) die Dachstreben (7) in einer abgelegten Stellung angeordnet sind, das Ablagefach (5) ein verkleinertes Volumen aufweist und mittels des Deckels (8) geschlossen ist, und wobei in einer zweiten, oberen Position die Dachstreben (7) oberhalb eines Fahrersitzes (9) angeordnet sind und das Ablagefach (5) ein vergrößertes Volumen aufweist.

2. Karosserie nach Anspruch 1,
**dadurch gekennzeichnet, dass**
das Dachelement (4) in seinen beiden Positionen verriegelbar ist.

3. Karosserie nach Anspruch 1 oder 2,
**dadurch gekennzeichnet, dass**
die Dachstreben (7) in der oberen Position des Dachelements (7) mit einem Windschutzscheibenrahmen (10) verbunden sind.

4. Karosserie nach Anspruch 3,
**dadurch gekennzeichnet, dass**
die Dachstreben (7) mit dem Windschutzscheibenrahmen (10) verriegelbar sind.

5. Karosserie nach einem der Ansprüche 1 bis 4,
**dadurch gekennzeichnet, dass**
die Drehachse (6) in einem hinteren Bereich der Karosserie (2) angeordnet ist.

6. Karosserie nach einem der Ansprüche 1 bis 5,
**dadurch gekennzeichnet, dass**
zwischen den Dachstreben (7) ein zwischen einer geöffneten und geschlossenen Stellung verstellbares Abdeckelement (12) angeordnet ist.

7. Karosserie nach Anspruch 6,
**dadurch gekennzeichnet, dass**
das Abdeckelement (12) in einer Aufnahme in dem Ablagefach (5) aufnehmbar ist.

8. Karosserie nach einem der Ansprüche 1 bis 7,
**dadurch gekennzeichnet, dass**
die Dachstreben (7) in das Dachelement (4) einfahrbar sind.

9. Karosserie nach einem der Ansprüche 1 bis 8,
**dadurch gekennzeichnet, dass**
ein in einer Radnabe angeordneter Elektromotor als Antriebsquelle für das Zweirad (1) vorgesehen ist.

10. Karosserie nach Anspruch 9,
**dadurch gekennzeichnet, dass**
in einer Bodengruppe (11) der Karosserie (2) wenigstens eine den Elektromotor mit elektrischem Strom versorgende Batterie angeordnet ist.

## Claims

1. Body (2) for a two-wheeler (1), particularly a scooter, having a roof element (4) and having a storage compartment (5),
**characterised in that**
the roof element (4) has at least two roof struts (7) and a lid (8) for the storage compartment (5), and that the roof element (4) is mounted about a rotational axis (6) so as to be rotatable between at least two positions, wherein in a first, lower position of the roof element (4) the roof struts (7) are arranged in a laid position, the storage compartment (5) has a reduced volume and is closed by means of the lid (8), and wherein in a second, upper position the roof struts (7) are arranged above a driver's seat (9) and the storage compartment (5) has an enlarged volume.

2. Body according to claim 1,
**characterised in that**
the roof element (4) can be locked in its two positions.

3. Body according to claim 1 or 2,
**characterised in that**
the roof struts (7) in the upper position of the roof element (7) are connected with a windscreen frame (10).

4. Body according to claim 3,
**characterised in that**
the roof struts (7) can be locked to the windscreen frame (10).

5. Body according to any of claims 1 to 4,
**characterised in that**
the rotational axis (6) is arranged in a rear region of the body (2).

6. Body according to any of claims 1 to 5,
**characterised in that**
between the roof struts (7) is arranged a cover element (12) which can be adjusted between an opened and closed position.

7. Body according to claim 6,
**characterised in that**
the cover element (12) can be received in a receptacle in the storage compartment (5).

8. Body according to any of claims 1 to 7,
**characterised in that**
the roof struts (7) can be retracted into the roof element (4).

9. Body according to any of claims 1 to 8,
**characterised in that**
an electric motor arranged in a wheel hub is provided as a drive source for the two-wheeler (1).

10. Body according to claim 9,
**characterised in that**
in a floor assembly (11) of the body (2) is arranged at least one battery supplying the electric motor with electric current.

## Revendications

1. Carrosserie (2) pour un deux-roues (1), en particulier un scooter, avec un élément de toit (4) et un compartiment de rangement (5),
**caractérisée en ce que**
l'élément de toit (4) présente au moins deux barres de toit (7) et un couvercle (8) pour le compartiment de rangement (5), et **en ce que** l'élément de toit (4) est stocké de manière rotative autour d'un axe de rotation (6) entre au moins deux positions, dans laquelle, dans une première position inférieure de l'élément de toit (4), les barres de toit (7) sont agencées dans un état rangé, le compartiment de rangement (5) présente un volume réduit et est fermé au moyen du couvercle (8), et dans laquelle, dans une seconde position supérieure, les barres de toit (7) sont agencées au-dessus d'un siège conducteur (9) et le compartiment de rangement (5) présente un volume accru.

2. Carrosserie selon la revendication 1,
**caractérisée en ce que**
l'élément de toit (4) peut être verrouillé dans ses deux positions.

3. Carrosserie selon la revendication 1 ou 2,
**caractérisée en ce que**
les barres de toit (7) sont reliées à un cadre de pare-brise (10) dans la position supérieure de l'élément de toit (7).

4. Carrosserie selon la revendication 3,
**caractérisée en ce que**
les barres de toit (7) peuvent être verrouillées avec le cadre de pare-brise (10).

5. Carrosserie selon l'une quelconque des revendications 1 à 4,
**caractérisée en ce que**
l'axe de rotation (6) est agencé dans une zone arrière de la carrosserie (2).

6. Carrosserie selon l'une quelconque des revendications 1 à 5,
**caractérisée en ce qu'**
un élément de recouvrement (12) pouvant être ajusté entre un état ouvert et un état fermé est agencé entre les barres de toit (7).

7. Carrosserie selon la revendication 6,
**caractérisée en ce que**
l'élément de recouvrement (12) peut être logé dans un logement dans le compartiment de stockage (5).

8. Carrosserie selon l'une quelconque des revendications 1 à 7,
**caractérisée en ce que**
les barres de toit (7) peuvent être rétractées dans l'élément de toit (4).

9. Carrosserie selon l'une quelconque des revendications 1 à 8,
**caractérisée en ce qu'**
un moteur électrique agencé dans un moyeu de roue est prévu comme source d'entraînement pour le deux-roues (1).

10. Carrosserie selon la revendication 9,
**caractérisée en ce qu'**
au moins une batterie alimentant le moteur électrique en courant électrique est agencée dans un bloc plancher (11) de la carrosserie (2).
